# EUROPEAN PATENT APPLICATION

(11) **EP 4 567 912 A1**
(43) Date of publication of application: **11.06.2025**
(21) Application number: 24217377.1
(22) Date of filing: 04.12.2024
(51) Int. Cl.: H01M 4/04

(54) **PLANT FOR FORMING BATTERY CELLS**

(30) Priority: 06.12.2023 IT 202300026139
(71) Applicant: System Ceramics S.p.A., 41042 Fiorano Modenese MO (IT); Flexlink AB, 415 50 Göteborg (SE)
(72) Inventor: GOZZI, Andrea, I-41042 Fiorano Modenese (MO) (IT); LARSSON, Andreas, 415 05 Göteborg (SE); SOCCI, Luciano, I-41042 Fiorano Modenese (MO) (IT)
(74) Representative: Porta & Consulenti Associati S.p.A.

(57) **Abstract**

A battery cell formation plant (10) comprises a plurality of formation racks (14), each of which comprises: a plurality of drawers (24) each of which is coupled to at least one tray (11) configured to contain battery cells (100); a transfer station (25) configured to transfer at least one tray (11) to a respective drawer (24); a plurality of formation chambers (26) each configured to accommodate at least one drawer (24) and to provide a power supply to implement a formation of battery cells (100); a first transport system (15) operable on each drawer (24) to selectively transport the drawers (24) between the transfer station (25) and the formation stations (26). The system further comprises a second transport system (16) that reaches the transfer station (25) of each formation rack (14). The second transport system (16) comprises: a modular track (T) comprising a plurality of modular tiles (17) to create at least one guide path (P); a plurality of shuttles (18), wherein each shuttle (18) runs along the modular track (T) following the guide path (P), is configured to transport a tray (11) and is equipped with its own propulsion system (50).

## Description

The present invention refers to a plant for forming battery cells.

The present invention finds particular application in the production of secondary batteries, preferably rechargeable lithium batteries. Although specific reference will be made to lithium battery cells in the course of the present disclosure, the teachings of the present invention also apply to the case of other secondary battery cells wherein one of the cell construction processes comprises forming the electrode by passing current therethrough.

In the production of lithium battery cells, after mechanical assembly operations of the battery cells, the battery cells must be subjected to electrical operations that lead to electrochemical phenomena within the battery cells such that the anodes are covered by the so-called "Solid Electrolyte Interphase" (SEI). These operations are known in the technical field with the term "formation" of battery cells.

The battery cell formation operations typically involve a succession of battery cell charge/discharge cycles by applying maximum currents of 0.1-0.2 C for predetermined times (on the order of 10-30 hours). The magnitude "C" indicates a current value expressed in amperes numerically equal to the cell capacity in Ah (e.g. for a cell capacity of 2 Ah, the magnitude C is 2 A). The currents actually applied, the charge/discharge times and the number of repetitions of the various charge/discharge cycles depend on the type of battery and each battery manufacturer has developed its own "recipe" that allows to best form the electrode surface layer SEI to maximise battery performance. In fact, only if the formation process is performed properly will the electrode surface layer SEI be deposited on the electrodes of the battery, which optimizes the properties of the battery in terms of charge capacity and uniformity of charge/discharge cycles.

In the Applicant's experience, battery cell formation is performed in a forming plant in which battery cell trays, each containing a plurality of battery cells arranged in a matrix pattern, are positioned in respective formation chambers. Located at each formation chamber is a contacting assembly, configured to make electrical contact with each battery cell, a power supply assembly and a control unit that defines the timing and manner of the charge and discharge steps of the battery cell. The contacting assembly is mounted on a vertically movable frame so that it can be lowered onto the tray, positioned below it, and come into contact with the battery cells housed in the tray.

Following the formation operations, the formed battery cells are subjected to electrically passive operations, carried out in special rest stations (aging stations) for times in the order of tens or hundreds of hours, in which the cells are left "to rest" to allow them to stabilise at specially controlled temperatures.

In the Applicant's experience, in formation plants, the formation chambers with the related contacting assemblies are arranged in cabinets, known as "racks", which may comprise a very large number of floors in which a plurality of formation chambers are arranged side by side on each floor. The racks are open at their side walls to allow the trays to be inserted and removed from the formation chambers. The trays containing the battery cells must be inserted very precisely into the formation chamber in order to allow the electrical connectors of the contacting assemblies to be coupled correctly with the electrical connectors of the battery cells.

In a modern formation plant there are dozens of formation racks.

In fact, by virtue of the ever-increasing demand for secondary batteries, battery production plants have reached very large sizes. Suffice it to say that these plants are commonly called Gigafactories and that their sizes are expressed in GWh to indicate the electricity storage capacity expressed in GWh of the batteries produced there in a year. By way of example, a 1 GWh Gigafactory is able to produce enough batteries capable of powering around 15,000 electric vehicles in a single year. There are 50 GWh operating gigafactories.

Modern formation plants are highly automated so that the trays containing the battery cells are supplied to the racks and positioned inside the respective formation chambers automatically.

The Applicant noted that in formation plants there are automatic routing systems that run on the plant floor (i.e. on the floor on which the racks rest) between the various racks to bring the trays to the racks and that lift the trays to insert them into the formation chambers. These routing systems must be extremely precise in handling the trays, to ensure the required accuracy of tray insertion into the formation chambers. Errors in positioning the trays in the formation chambers could in fact cause failure in the electrical coupling between the contacting assembly and the battery cells, resulting in the failure of the formation process.

In accordance with the Applicant's experience, such routing systems may comprise linear motor-driven transport tracks in which each tray or each tray conveyor is equipped with a magnet that interacts with current-driven linear stators that form transport tracks so that each tray can be advanced, stopped, raised and lowered by controlling its position with extreme precision. Alternatively, such routing systems may include autonomously guided independent conveyors (AGVs), such as self-driving forklifts, which move by controlling their exact position using a plurality of sensors on board and distributed throughout the plant.

The Applicant noted that in large plants where thousands of battery cells may be formed, a large number of self-driving forklifts could be required, which would imply a large number of sensors distributed throughout the plant and extremely advanced and sophisticated software systems capable of managing the movements of individual forklifts and coordinating the movements, speeds and positions of all the forklifts simultaneously. Besides being extremely expensive and potentially prone to errors, these software systems would have to be redesigned every time the plant is modified, e.g. increased in its capacity by increasing the number of racks. In addition, the costs of a formation plant using routing systems based on self-driving forklifts could be very high, both in terms of the costs of the individual self-driving forklifts, the sensor network that has to be installed and wired, and the development of software capable of handling such a routing system. Again, the height dimensions of the racks could be limited by the maximum lifting heights which self-driving forklifts can reach, limiting the number of housing chambers that the racks can have with respect to racks that can be freely extended in height.

The Applicant also noted that formation plants with routing systems based on linear motor-driven transport track tracks or similar systems that are able to control the position and speed of the trays with extreme precision on an instant-by-instant basis, in addition to being extremely expensive due to the costs of such transport tracks, require very careful design, accurate installation and wiring, and may require frequent maintenance to ensure proper operation. Furthermore, a "simple" expansion of the system requires costly new wiring, both in terms of money and time, and integration of new linear motor-driven transport tracks with the existing ones. If the entire plant layout were to be redesigned, the transport tracks and associated cabling would have to be substantially redesigned with the possibility that at least some of the pre-existing transport tracks and wiring could not be reused.

The Applicant thus felt the need to provide a formation plant that could be more easily, more economically and more quickly reconfigured in its layout and that possibly had no limitations on the possibility of increasing its production capacity.

The Applicant has verified that the extreme transport accuracy of the routing systems is in fact mainly required at certain points of the plant and in particular where the trays containing the battery cells are inserted into the formation chambers.

The Applicant noted, however, that in the routing systems summarised above, a reduction in transport accuracy in the path followed by the trays to reach the racks would immediately be reflected in a reduction in the accuracy of insertion of the trays into the formation chambers.

The Applicant perceived that by decoupling the transport function of the trays from the positioning function of the trays in the formation chambers, it would be possible to physically and functionally distinguish between a first part of the routing system that brings the trays to the racks and a second part of the routing system that places the trays in the formation chambers, making it possible to set up the first part of the routing system with a lower transport accuracy than the transport accuracy of the second part of the routing system.

The Applicant noted that, in this way, a reconfiguration of the plant layout would only require a reconfiguration of the first part of the routing system and would not require reconfiguration of the second part of the routing system, i.e. the part equipped with high-precision conveyors.

The Applicant has therefore found that by arranging a system with a plurality of formation racks wherein each formation rack comprises drawers into which trays transportable by high-precision transport members between a transfer station and the formation chambers are inserted, and by providing the transfer station with trays transported by shuttles, wherein such shuttles move along transport paths formed by modules mechanically coupled to each other according to a plurality of configurations, and wherein such modules are passive modules, it is possible to reconfigure the layout of the formation plant simply by reconfiguring the mutual coupling between passive modules.

The present invention therefore concerns a plant for forming battery cells.

Preferably, a plurality of formation racks is provided.

Preferably, each formation rack comprises a plurality of drawers each of which can be coupled to at least one tray configured to contain battery cells.

Preferably, each formation rack comprises a transfer station configured to transfer at least one tray to a respective drawer.

Preferably, each formation rack comprises a plurality of formation chambers each configured to accommodate at least one drawer and to provide a power supply to implement a battery cell formation.

Preferably, each formation rack comprises a first transport system configured to selectively transport said trays between the transfer station and the formation stations.

Preferably, said plant further comprises a second transport system that extends along the plant and reaches the transfer station of each formation rack.

Preferably, said second transport system comprises a modular track comprising a plurality of modular tiles arranged in mechanical connection with each other to create at least one guide path.

Preferably, said second transport system comprises a plurality of shuttles.

Preferably, each shuttle runs along said modular track following said guide path and is configured to transport a tray.

Preferably, each shuttle is provided with its own propulsion system.

The transfer station acts as an interface between the first transport system and the second transport system.

The Applicant has verified that the first transport system can be implemented with high transport accuracy, i.e. with adequate transport accuracy to place the battery cell trays in their respective formation chambers, guaranteeing correct formation of the battery cells.

The Applicant has also verified that by providing the second transport system with modular tiles and shuttles with their own propulsion system that move along the route defined by the modular tiles, the second transport system can be easily configured and if necessary, reconfigured. In fact, the driving intelligence is basically implemented in the shuttles that can be programmed to move along the guide path. The implementation of the driving intelligence is simplified, however, since the shuttles are still forced to follow paths implemented by the modular tiles. Such modular tiles, preferably passive (i.e. requiring no wiring) can therefore be changed very quickly, with minimal effort and without complex planning into a desired layout.

By "battery cell" is meant an assembly composed of at least one anode, one cathode, a possible separator made of dielectric material interposed between anode and cathode and an electrolyte. A battery comprises at least one battery cell.

By "formation" is meant a process in which a battery cell is subjected to charge/discharge/recharge cycles. The currents applied during the charge/discharge/recharge cycles, measured in Amperes, are numerically one order of magnitude less than the number expressing the total capacity in Ah of the battery cell. For example, when a battery cell has a capacity of 1Ah, the maximum currents applied are about 0.1 - 0.2 Amperes. The charge/discharge/recharge cycles are implemented for such a time (e.g., 12-30 hours) as to reach maximum voltage, minimum voltage, and then return the battery cell to a known state of charge, typically 80%.

By "bi-directional power supply" is meant a power supply device capable of supplying electrical energy to a user device and extracting energy from it, allowing a bi-directional exchange of energy between the user device and the power supply device. In a bi-directional power supply the direction of the electrical energy flow is directed in a controlled manner from the power supply device towards the user device or from the user device towards the power supply device; the possibility that the flow of energy is simultaneously directed from the power supply device towards the user device and from the user device towards the power supply device is never provided.

The present invention may have at least one of the preferred features described below. Such features may be present individually or in combination with each other, unless expressly stated otherwise, in the method of the present invention.

Preferably, each modular tile comprises a rail structure.

Preferably, such rails are grooved and the grooved rail structure comprises a first pair of parallel grooves and a second pair of parallel grooves extending in a perpendicular direction to the first pair of parallel grooves.

Preferably, the grooved rail structure forms said at least one guide path when the modular tiles are arranged in mechanical connection with each other.

Preferably, at least some of the modular tiles are configured with the same design.

Preferably at least 50%, more preferably at least 60%, more preferably at least 70%, more preferably at least 80%, more preferably at least 90%, more preferably at least 95% of the modular tiles are configured with the same design.

"Modular tiles configured with the same design" means that these modular tiles have the same dimensions and configurations and include the same grooved rail structure arranged in the same way on each modular tile.

The purpose of modular tiles with the same design is to further simplify the construction and flexibility of the second transport system by using modular tiles as standard components.

Preferably, modular tiles with the same design are produced with the aim of being identical.

The modular tiles can be made, for example, of plastic materials, composite materials, metal materials, wood or wood composite materials.

Preferably, the modular tiles comprise an upper side, a lower side, a first longitudinal side edge, a second side edge, a first side edge and a second side edge.

Preferably, the grooved rail structure is arranged on the upper side, where the first pair of parallel grooves extends parallel to the first longitudinal side edge and the second longitudinal side edge.

Preferably, the second pair of parallel grooves extends parallel to the first side edge and the second side edge.

Preferably, each modular tile comprises alignment structures arranged at side edges and configured to interact with alignment structures of further modular tiles to align the grooved rail structures when the modular tiles are arranged in mechanical connection with each other.

Preferably, the alignment structures are arranged at the first longitudinal side edge and the second longitudinal side edge.

The alignment structures ensure the correct alignment between adjacent modular tile grooved rail structures to create a guide path without misaligned grooves.

The alignment structures can be arranged as projecting sections and recessed sections. In this way, the projecting sections are configured to engage the recessed sections of adjacent modular tiles and the recessed sections are configured to engage the projecting sections of adjacent modular tiles.

Preferably, the propulsion system of each shuttle comprises an electric motor and four wheels, whereby the electric motor drives at least two of said four wheels.

The wheels of the propulsion system are configured to fit into the grooved rail structure of the modular tiles, so that the shuttle is slidably coupled to the guide path.

Preferably, each shuttle comprises an on-board processor that sends movement commands to the propulsion system to move the shuttle along said modular track.

Preferably, each modular tile comprises a unique identification code.

Preferably, the unique identifier is RFID (Radio Frequency Identification), which propagates electro-magnetic waves that allow a modular tile to be uniquely identified.

The unique identification code of each modular tile serves for the orientation of the shuttles that engage the modular tile. In this way, no wiring is required between the modular tiles.

It should be noted that in this way, in the event of a new installation or a change to a plant layout, only the individual identification codes of the modular tiles as arranged or reconfigured can be transmitted to the shuttles so that they can readily and substantially immediately run along new guide paths.

Preferably, said second transport system comprises support structures to which said modular tiles are connected.

Preferably, such support structures are supported on a floor level and support said modular track at an elevation above said floor level.

In this way, the guide path made by the modular tiles is raised above the floor of the plant in which the system is placed. The floor level therefore remains largely unobstructed and can be used for movements of plant personnel or for other purposes.

Preferably, the transfer station of each formation rack is placed at said transport level above the floor level.

Preferably, a formation rack maintenance station is provided below the transfer station and at floor level.

In this way, the maintenance station is easily accessible for maintenance personnel who do not interfere with the trays being transported to the transport level.

Preferably, each transfer station comprises a tray inlet opening to allow a tray to enter the transfer station.

Preferably, each transfer station comprises a drawer inlet opening to allow a drawer to enter the transfer station.

Preferably, each transfer station comprises a drawer outlet opening to enable the exit of a drawer transferred to a tray from the transfer station.

The drawer inlet opening can coincide with the drawer outlet opening.

Preferably, the drawer inlet opening and the drawer outlet opening face an internal volume of the formation rack.

The tray inlet opening preferably faces the environment outside the formation rack.

Preferably, the tray inlet opening is placed at said transport level.

The exact position and orientation of the tray inlet opening depends on the position from which the first transport system reaches the formation rack.

The Applicant noted that it is more efficient to position and orient the tray inlet openings of all the formation racks in the same way, so that racks can be arranged substantially equal to each other and thus reduce the design and construction cost. In fact, the great flexibility provided by the modular tiles and their easy repositioning make it very easy to set up guide paths that reach any position.

Preferably, said shuttle comprises a pusher for directing the tray towards the tray entry of the transfer station.

Preferably, said modular track comprises at least one modular tile placed below the tray inlet opening. In this case, the shuttle pusher is a lifter configured to lift the tray towards said drawer.

To engage and retain a tray that is delivered to a drawer, each drawer preferably comprises an engagement assembly.

The engagement assembly can for example be formed by grippers that close on the tray when the tray contacts a gripper actuator.

When the shuttle pusher pushes the tray towards the drawer, the tray can contact this actuator and cause the gripper to close.

Preferably, the engagement assembly is also configured to position the tray relative to the drawer in such a way that the tray is in a predetermined relative position with respect to the drawer when taken from the drawer.

By way of example, the grippers of the engagement assembly can centre the tray with respect to the drawer when closing onto the tray.

As mentioned, each formation chamber is configured to provide a power supply used to perform the formation of the battery cells contained in the tray(s) in the drawer inserted into the formation chamber.

For this purpose, power devices comprising a contacting assembly are provided, which is preferably configured to provide an electrical contact for each of said battery cells housed in a tray.

Each power device may also comprise at least one bidirectional power supply in electrical connection with the contacting assembly.

Each formation rack is equipped with at least one power supply unit designed to power the bidirectional power supplies.

In some embodiments, each drawer is mechanically connected to a respective power device.

In these embodiments, an electrical connector configured to connect with an electrical connector of the power device and supply the latter with power is provided in each formation chamber.

In these embodiments, when a tray is transferred to a drawer in the transfer station, the contacting assembly of the power device is electrically coupled to the battery cells contained in the tray.

In other embodiments, each formation chamber is mechanically connected to a respective power device.

In these embodiments, the power device is connected to a power supply in each formation chamber.

In these embodiments, when a drawer with an associated tray is brought into the formation chamber, the contacting assembly of the power device is electrically coupled to the battery cells contained in the tray.

Preferably, said plurality of formation chambers are arranged within a rack housing volume above said transfer station.

Preferably, the formation chambers are arranged one on top of the other to form a column of formation chambers. Within a formation rack there is preferably a plurality of columns of formation chambers.

Preferably, said first transport system comprises a lifter. The lifter is preferably configured to retain a drawer. The first transport system also preferably comprises an lifter handling device and vertical rails to which the lifter is slidably attached.

The lifter engages a drawer and, by means of the movement device, raises or lowers the drawer along the vertical guides.

Preferably, the lifter is also horizontally movable, possibly guided along vertical guides.

Preferably, a drawer is provided for each formation chamber.

Preferably, the drawers are contained in their respective formation chambers both when associated with a respective tray and when not associated with battery cell trays.

When a drawer is to be placed in the transfer station to receive a tray, the lifter is positioned at the formation chamber from which a drawer is to be taken that is not associated with any tray of battery cells.

The lifter engages the drawer, possibly moving along horizontal guides, and is then lowered along the vertical guides to the level of the transfer station. The lifter, possibly moving along horizontal guides, inserts the drawer into the transfer station through the drawer inlet opening, so that the drawer is associated with a tray of battery cells. Next, the lifter with the drawer associated with the tray of battery cells is returned to the vertical guides to be lifted to an empty formation chamber to insert the drawer associated with the tray of battery cells and allow battery cell formation to be initiated.

The vertical guides, horizontal guides (if any) and the movement device can be chosen according to the required movement and positioning accuracy.

By way of example, the vertical and possibly horizontal guides, the lifter and the movement device can be realised by linear motor-driven transport tracks in which the lifter is equipped with a magnet that interacts with current-driven linear stators that form the vertical and possibly horizontal guides in such a way that the lifter can be stopped, raised, lowered and moved horizontally while controlling its position with extreme precision.

Preferably, said lifter is placed inside the formation rack. Preferably, the lifter is placed between two rows of columns of formation chambers.

Preferably, the plant further comprises an insertion station configured to place a tray on a respective shuttle. Preferably, the modular track connects the insertion station with the transfer station of each formation rack.

When it is provided to subject the formed battery cells to aging in the formation plant, the Applicant perceived that it would be advantageous to provide aging racks in the same plant in order to be able to transfer the formed cells from the formation racks to the aging racks.

The Applicant found that the second transport system can also be configured to transfer trays of battery cells from the formation racks to the aging racks.

In this regard, the plant preferably comprises a plurality of aging racks.

Preferably, each aging rack comprises a plurality of drawers each of which can be coupled to at least one tray configured to contain battery cells.

Preferably, each aging rack comprises a transfer station configured to transfer at least one tray to a respective drawer.

Preferably, each aging rack comprises a plurality of aging chambers each configured to accommodate at least one drawer.

Preferably, each aging rack comprises a third transport system operating on each drawer to selectively transport said drawers between the transfer station and the aging stations.

Preferably, said modular track also connects the transfer stations of the formation racks with the transfer stations of the aging racks.

In this way, the ease of configuration and reconfiguration of the plant also extends to the aging racks.

Preferably, the transfer station of an aging rack is identical to the transfer station of a formation rack.

Preferably, each third transport system of each aging rack is identical to the first transport system of a formation rack.

Preferably each drawer of an aging rack is identical to a drawer of a formation rack except that the drawer of the aging rack does not comprise the power device.

Preferably each aging rack is identical to a formation rack except that the aging rack does not comprise power devices.

Further characteristics and advantages of the present invention will become clearer from the following detailed description of some preferred embodiments, with reference to the appended drawings and provided by way of indicative and non-limiting example, in which:
- Figure 1 is a schematic view from above of a battery cell formation plant according to the present invention;
- Figure 2 is a front schematic view of a portion of the formation plant in Figure 1;
- Figure 3 is a schematic perspective view of a formation module used in the plant in Figure 1;

- Figure 4 is a schematic perspective view of a transfer station of a formation rack used in the plant in Figure 1;
- Figures 5 and 6 are schematic representations of a formation rack used in the plant in Figure 1 in a side and front view respectively;
- Figure 7 is a schematic perspective view of a modular tile used in the plant in Figure 1;

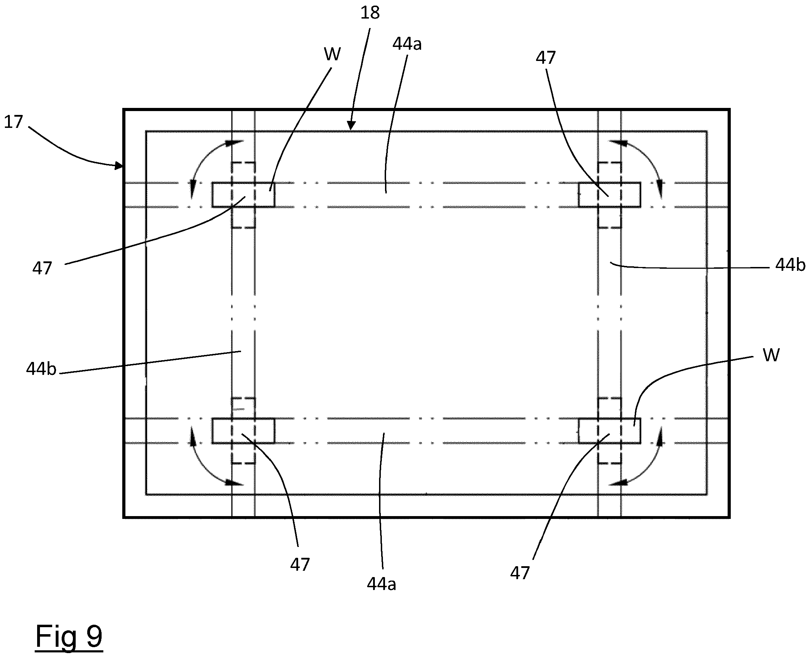

- Figures 8 and 9 are schematic representations of a further detail of the plant in Figure 1;
- Figures 10 and 11 are schematic representations of an aging rack used in the plant in Figure 1 in a side and front view respectively; and
- Figure 12 is a schematic perspective view of a transfer station of a formation rack used in the plant in Figure 1.

The representations in the appended figures must not be understood in scale, do not necessarily respect the proportions between the various parts and must be understood as diagrams.

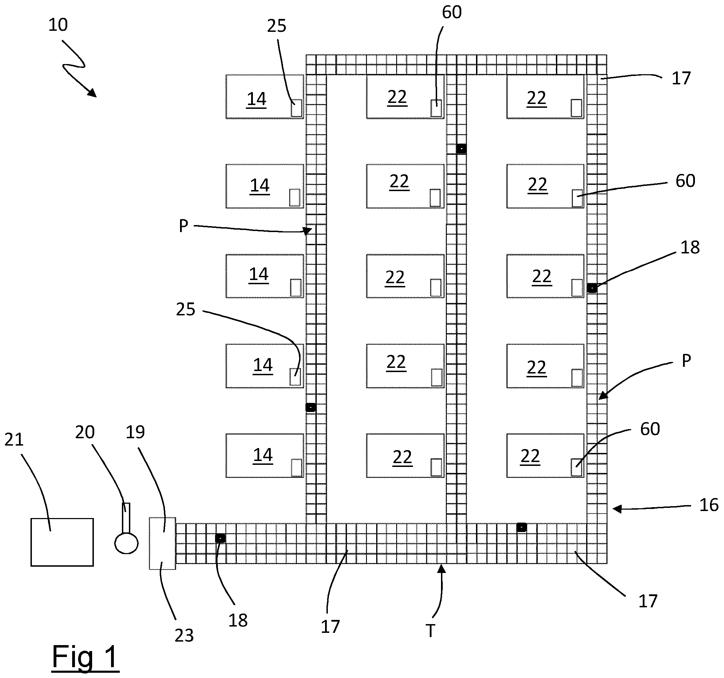

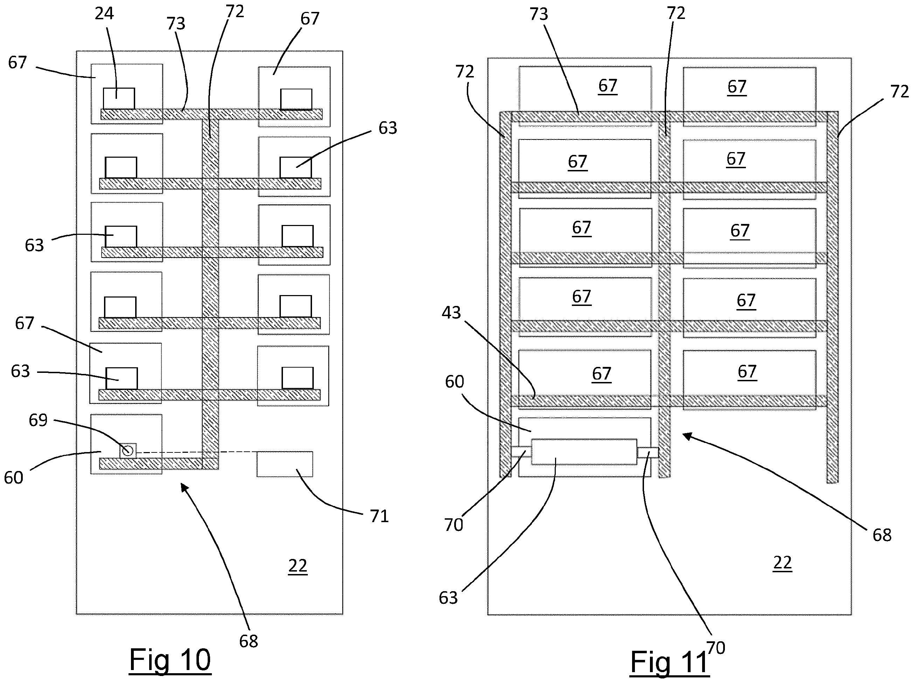

With initial reference to Figure 1, 10 denotes a battery cell formation plant in accordance with the present invention.

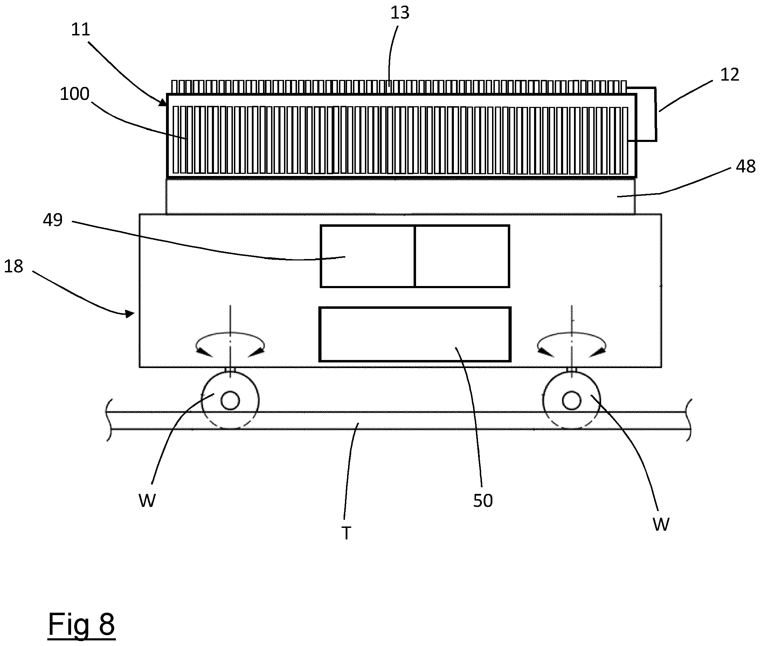

The plant 10 is arranged to receive trays 11 containing battery cells 100 (depicted in Figure 8), e.g. from a packaging plant upstream, not shown, and to subject the battery cells 100 to a formation process. The battery cells 100 are lithium-ion secondary electrochemical cells.

Each tray 11 is generically box-shaped, delimited by a base and side walls, and comprises conductor circuits 12 (depicted in Figure 8) to provide electrical contacts 13 contactable from outside the tray 11 electrically connected to the electrodes of the battery cells 100.

The plant 10 comprises a plurality of forming racks 14, in which the battery cells 100 contained in the trays 11 are subjected to a formation process. Each formation rack 14 is provided with a first transport system 15 to move the trays 11 of battery cells internally within the formation rack 14.

The plant 10 comprises a second transport system 16 for transporting trays 11 to the formation racks 14 and for removing the trays 11 from the formation racks 14.

As schematically illustrated in Figure 1, the second transport system 16 comprises a plurality of modular tiles 17 along which shuttles 18 run.

The second transport system 16 extends at least between an insertion station 19 and the formation racks 14.

At the insertion station 19, the trays 11 containing the battery cells 100 are placed on the shuttles 18, with only one tray 11 being placed on each shuttle 18.

The insertion station 19 is preferably served by one or more robots 20, e.g. of the pick-and-place type, configured to take the trays 11 from a conveyor 21 and deposit them on the shuttles 18.

In the preferred embodiment of the invention, the system 10 further comprises a plurality of aging racks 22, where the trays 11 are sent after the formation of the respective battery cells 100 has been completed.

In the aging racks 22, the battery cells 100 are subjected to electrically passive phases in which the battery cells 100 are allowed to "rest" to stabilise at specially controlled temperatures. These rest periods can last for hundreds of hours.

The second conveyor system 16 also runs between the formation racks 14 and the aging racks 22 to transport the trays 11 to the aging racks 22 and from the aging racks 22 to an extraction station 23 where the trays 11 with the battery cells 100 on board are picked up by the shuttles 18 to be sent to other parts of the same plant or to subsequent plants to pick up the battery cells 100 from the trays 11 and complete the battery construction.

In the preferred embodiment of the invention, the extraction station 23 physically coincides with the insertion station 19, as schematically illustrated in Figure 1.

Each formation rack 14 comprises a plurality of drawers 24 each of which is configured to be coupled to at least one tray 11. A tray 11 is coupled to a respective drawer 24 in a transfer station 25 of the formation rack 14. Each formation rack 14 further comprises a plurality of formation chambers 26 into which the drawers 24 are transferred via the first transport system 15.

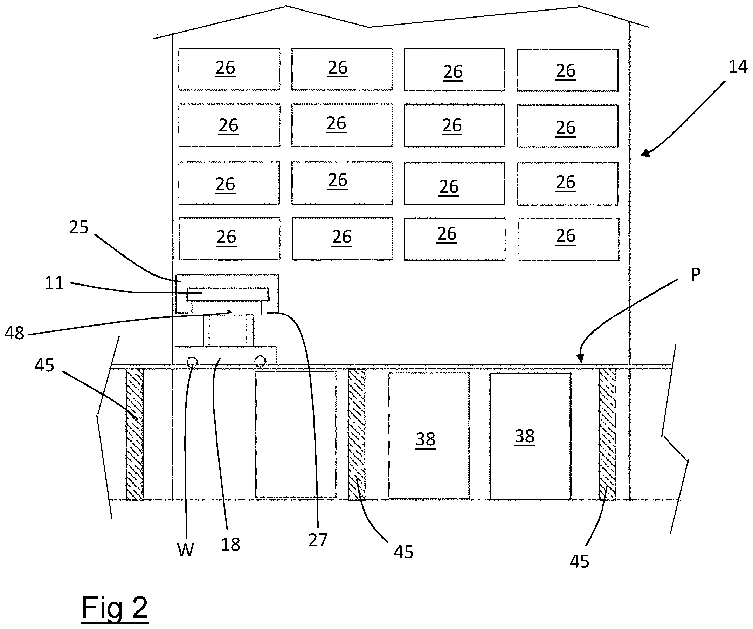

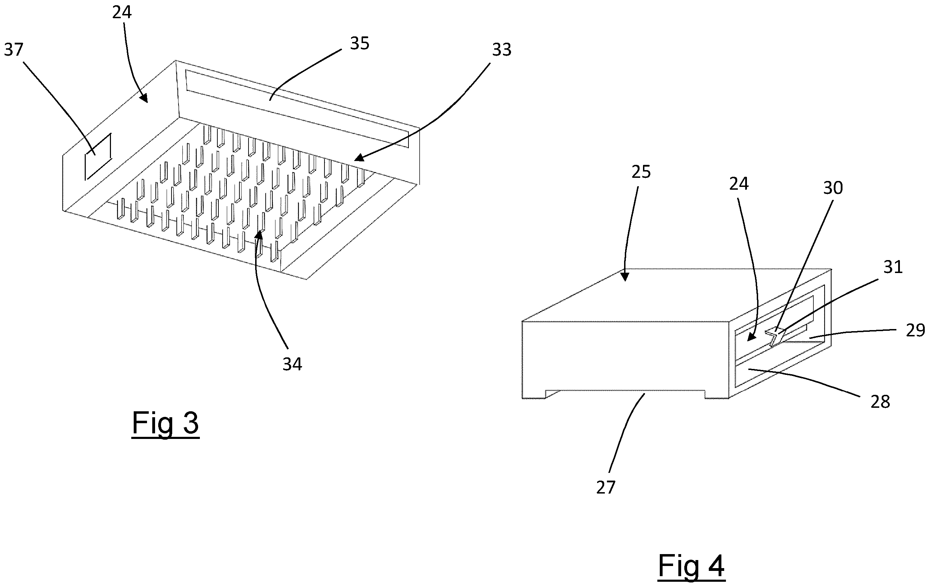

As schematically illustrated in Figure 2, each formation rack 14 comprises a single transfer station 25 to which a tray 11 is delivered by the second transport system 16. Figure 4 schematically illustrates transfer station 25, which comprises a tray inlet opening 27 to allow the tray 11 to enter the transfer station 25. The tray inlet opening 27 has been shown in a lower portion of the transfer station 25, as in the preferred embodiment of the invention the trays 11 are fed to the transfer station 25 by lifting them into it. The tray inlet opening 27 is placed at a transport level which is elevated above floor level (i.e. the level at which the floor of the plant is placed). The transfer station 25 further comprises a drawer inlet opening 28 to allow a drawer 24 to enter the transfer station 25 and a drawer outlet opening 29 to allow a drawer 24 to exit the transfer station 25. The drawer inlet opening 28 physically coincides with the drawer outlet opening 29. In the preferred embodiment of the invention, the drawer inlet opening 28 and the drawer outlet opening 29 are placed on a side of the transfer station 25.

Each drawer 24 comprises an engagement assembly 30 to retain a tray 11. As schematically illustrated in Figure 4, the engagement assembly 30 may comprise one or more grippers 31 that close onto tray 11. When there are at least two grippers 31, they are placed on opposite sides of the drawer 24 so that when they close to retain the tray 11 they exert a centring action on the tray 11 with respect to the drawer 24. In non-illustrated embodiments in which the tray 11 is fed into the transfer station 25 from above or from the side, the tray 11 can be held in place on the drawer 24. In these embodiments, the engagement assembly 30 may not be present.

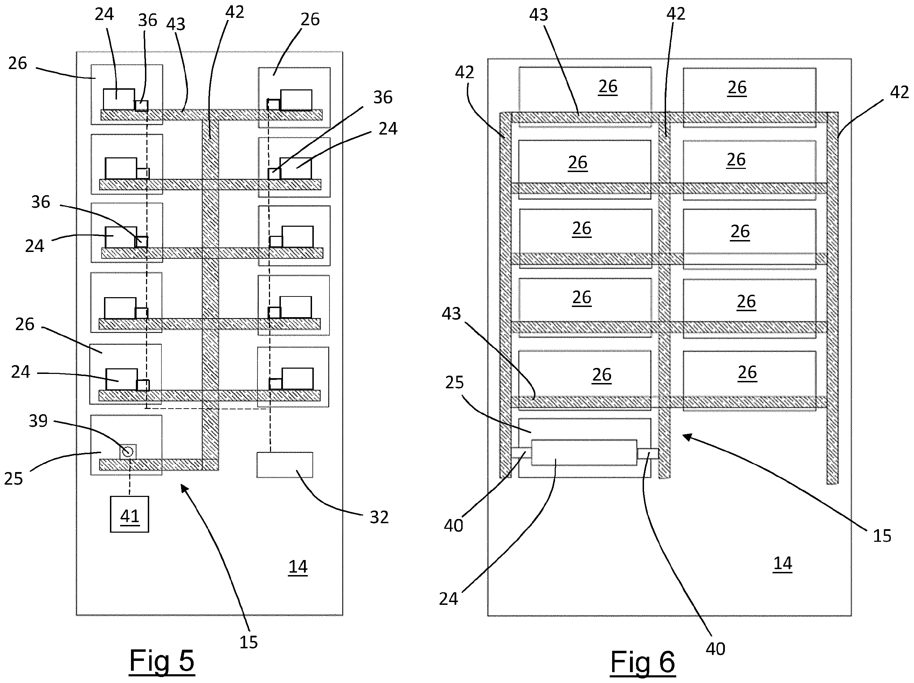

The formation chambers 26 are placed inside the formation rack 14 above the transfer station 25, as schematically illustrated in Figure 2. Each formation chamber 26 is defined by a respective housing space within the formation rack 14. Each formation chamber 26 is enclosed to the outside of the formation rack by one or more perimeter walls of the formation rack 14. Each formation station 26 is open towards the inside of the formation rack 14 to allow the insertion and removal of a drawer 24 coupled to a tray 11. The formation chambers 26 are placed one above the other along a first column of formation chambers 26 and in each formation rack 14 a plurality of columns of formation chambers 26 are provided. As schematically illustrated in Figures 5 and 6, there is a space in each formation rack 14 between the columns of formation chambers 26 not occupied by the formation chambers 26. This space can be used to accommodate at least part of the first transport system 15.

Each formation chamber 26 is configured to provide a power supply used to form the battery cells 100 contained in the tray 11 or trays 11 in the drawer 24. This power supply is provided by the formation rack 14 which includes a power supply unit 32 (schematically depicted in Figure 5) electrically connected to an electrical power source. The battery cells 100 are placed in electrical contact, via the aforementioned electrical contacts 13, with a respective power device 33 supplied by the power supply unit 32. Each power device 33 comprises a contacting assembly 34 (schematically illustrated in Figure 3) that directly contacts the electrical contacts 13 located on the tray 11 and electrically connected to the electrodes of the battery cells 100. Each power device 33 further comprises at least one bidirectional power supply 35, preferably one bidirectional power supply 35 for each battery cell 100, which receives electrical power from the electrical power supply unit 32 of the formation rack 14 and which is electrically connected to the contacting unit 34. Each bidirectional power supply 35 is sized to deliver a maximum current substantially comprised between 0.05 C and 0.4 C, where C indicates a current value expressed in amperes numerically equal to the capacity in Ah of a battery cell 100.

In the preferred embodiment of the invention, each drawer 24 comprises a respective power device 33 which is mechanically connected to the drawer 24. When a tray 11 is coupled to a drawer 24 in the transfer station 25, the mechanical coupling between the drawer 24 and the tray 11 couples the contacting assembly 34 to the electrical contacts 13. When the drawer 24 is brought into the respective formation chamber 26, an electrical connector 36 in the formation chamber 26 is electrically coupled with an electrical connector 37 of the power device 33. The electrical connector 36 of the formation chamber 26 is powered by the electrical power supply unit 32 of the formation rack 14, as schematically illustrated in Figure 5.

As schematically illustrated in Figure 2, each formation rack 14 comprises at least one maintenance station 38 located at floor level and below the transfer station 25. The function of the maintenance station is to enable maintenance of the formation rack 14. In some embodiments, each drawer 24 can be positioned by the first transport system 15 at a maintenance station 38.

The first transport system 15, comprises a lifter 39 depicted in Figures 5 and 6. The lifter 39 may comprise two gripping handles 40 that laterally grip a drawer 24. These gripping handles 40 by gripping the drawer 24 align the drawer 24 with an internal reference in the transport system 15, so that the position of the drawer 24 is precisely determined. The lifter 39 is connected to a movement device 41 that moves the lifter 39 within the formation rack 14. The first transport system 15 also comprises vertical guides 42 and, in the embodiment illustrated in Figures 5 and 6, horizontal guides 43. The vertical guides 42 run vertically inside the formation rack 14 and reach upwards to all the formation chambers 26. The vertical guides 42 extend from the transfer station 25. When the maintenance station 38 is present, the vertical guides 42 also reach the maintenance station 38. The horizontal guides 43 run from the vertical guides 42 at each formation chamber 26 and reach the formation chambers 26. In embodiments in which the horizontal guides 43 are not provided, the lifter 39 can be equipped with extending arms that fit into the formation stations 26. The vertical guides 42 define a vertical transport path for the lifter 39 and are placed in the space between the formation chamber columns 26, so that the lifter 39 transporting a respective drawer 26 can move within the formation rack 14 without interfering with the formation chambers 26. The movement device 41 may be any device capable of moving the lifter 39 along the vertical guides 42 and, when present, along the horizontal guides 43. An embodiment provides that the movement device is a trolley to which the lifter 39 with at least one magnet is connected. In this example, the vertical guides 42 and horizontal guides 43 are formed by current-driven linear stators. The carriage magnet interacts with the linear stators to create a linear motor-driven conveyor system.

The second transport system 16, as mentioned, comprises a plurality of modular tiles 17. The modular tiles 17 are configured to be mechanically connected to each other to create a modular track T that defines a plurality of guide paths P along which the shuttles 18 can run.

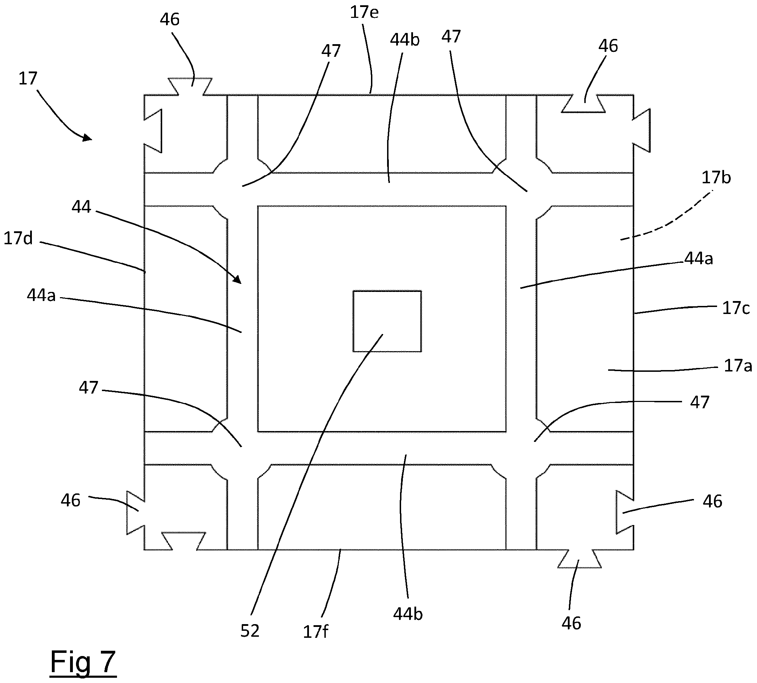

As illustrated in Figure 7, each modular tile 17 comprises a grooved rail structure 44 with a first pair of parallel grooves 44a and a second pair of parallel grooves 44b extending in a perpendicular direction to the first pair of parallel grooves 44a. The grooved structure of the rails 44 forms the guide path P when a plurality of modular tiles 17 are connected together. Each modular tile 17 is a single body, i.e. it is made as a single piece.

The modular tiles 17 are fixed to support structures 45 (depicted in Figure 2) such as vertical uprights that rest on the floor level and support the modular track T at an elevated transport level above said floor level.

Preferably, the modular tiles 17 are the same as each other in the sense that modular tiles 17 have the same dimensions and configurations and are equipped with the same grooved rail structure 44.

As illustrated in Figure 7, the modular tiles 17 have an extension in the longitudinal and lateral directions, where the longitudinal direction is perpendicular to the lateral direction. The longitudinal direction of the modular tiles 17 when the modular tiles 17 are arranged in connection with each other corresponds to a longitudinal direction of the transport path T. The lateral direction of the modular tiles 17 when the modular tiles 17 are arranged in connection with each other corresponds to a lateral direction of the transport path T.

The modular tiles 17 comprise an upper side 17a, a lower side 17b, a first longitudinal side edge 17c, a second longitudinal side edge 17d, a first side edge 17e and a second side edge 17f. The grooved rail structure 44 is arranged on the upper side 17a and looks like a grooved structure recessed in the modular tile structure 17. The first pair of parallel grooves 44a extends in the longitudinal direction parallel to the first longitudinal side edge 17c and the second longitudinal side edge 17d. The second pair of parallel grooves 44b extends in a lateral direction parallel to the first side edge 17e and the second side edge 17f. The lower side 17b comprises a plurality of reinforcing ribs (not shown) that allow for a rigid and durable construction of the modular tiles 17. Preferably, the extension of the modular tiles 17 in the longitudinal direction is equal to the extension of the modular tiles 17 in the lateral direction.

The modular tiles 17 comprise alignment structures 46 arranged on the first longitudinal side edge 17c, the second longitudinal side edge 17d, the first side edge 17e and the second side edge 17f. The alignment structures 45 are configured to align the grooved rail structures 44 when the modular tiles 17 are arranged next to each other. The alignment structures 45 can be of any suitable design and ensure the correct alignment between adjacent modular tiles 17 to create a guide path P without misaligned grooves. As illustrated in Figure 7, the alignment structures 45 are arranged as projecting and recessed sections of the respective side edges. The projecting sections engage the recessed sections of the adjacent modular tiles 17 and the recessed sections engage the projecting sections of the adjacent modular tiles 17.

Each modular tile 17 can be connected to four further modular tiles 17 ensuring that the respective grooved rail structures 44 are aligned with each other. It should be noted that it is advantageously possible to provide redundant, i.e. duplicate guide paths P in order to have, at least in some sections of the guide paths P, alternative guide paths P available to connect two positions of the modular route T. This possibility is useful in the event that maintenance is required on a section of the guide path P without interrupting the operation of the plant 10.

By arranging the modular tiles 17 in connection with each other, the grooved rail structures 44 act as guides for the shuttles 18. In this regard, each shuttle 18 comprises four wheels W that engage in the grooved rail structures 44. The first pair of parallel rail grooves 44a is arranged with the same rail gauge as the second pair of parallel rail grooves 44b, so that both pairs of rail grooves can accommodate the same wheels W. The first pair of parallel rail grooves 44a define first travel lanes for a shuttle 18. The first travel lanes are configured to drive the wheels W of the shuttle 18 in the longitudinal direction. The second pairs of parallel grooves 44b define second travel lanes for a shuttle 18. The second lanes are configured to guide the wheels W of the shuttle 18 in a lateral direction. The second pair of parallel grooves 44b intersects the first pair of parallel grooves 44a. At intersections between the first pair of parallel grooves 44a and the second pair of parallel grooves 44b of the same modular tile 17, four groove junctions 47 are formed. When the wheels W of the shuttle 18 are positioned in groove junctions 47, the shuttle 18 can change direction between the longitudinal and the lateral direction. Alternatively, the shuttles 18 can have two sets of wheels W with different orientations to change the direction of travel at the groove junctions 47. The shuttles 18 can then move from one modular tile 17 to any adjacent modular tile 17 to follow the guide path P that takes the shuttle 18 to its destination.

As illustrated schematically in Figure 8, each shuttle 18 includes a pusher 48 to direct the tray 11 from the shuttle 18 transported to the tray inlet opening 27 of the transfer station 25.

In the preferred embodiment of the invention, the pusher 48 is a lifter configured to lift the tray 11 within the transfer station 25. The lifter can, for example, be a platform lifted by an electric actuator system.

Each shuttle 18 can be connected to a control unit to manage the driving operation. It is clear that a plurality of shuttles 18 can be used simultaneously on modular tiles 17 when linked together to form a modular track T.

In the preferred embodiment of the invention, each shuttle 18 comprises an on-board processor 49 which sends movement commands to a propulsion system 50 of the shuttle 18 (as schematically illustrated in Figure 8) to move the shuttle 18 along said modular track T. The propulsion system 50 may be an electric motor connected to at least two, preferably all four, wheels W of the shuttle 18.

Each modular tile 17 comprises a unique identification code 52 for coding the guide path P. The coding of the guide path P can take place in this case by means of optical coding or by means of a transponder. A unique identification code 52 can for example be implemented in the form of an RFID tag or a QR code field and be integrated into scannable points on the upper side 17a of the modular tile 17, so that the shuttles 18 can safely scan or receive electromagnetic waves from each of the unique identification codes 52.

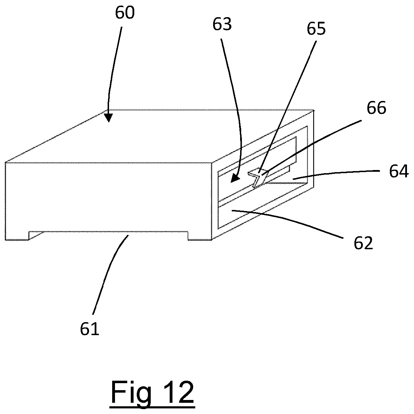

When present, each aging rack 22 comprises a transfer station 60 (Figure 12) to which a tray 11 is delivered by the second transport system 16. Like the transfer station 25 of the formation rack 14, the transfer station 60 of the aging rack comprises a tray inlet opening 61 to allow the tray 11 to enter the transfer station 60. The tray inlet opening 61 is placed in a lower portion of the transfer station 60, or at least in the same position in which the tray inlet opening 27 is placed in the transfer station 25 of the formation rack 14. The transfer station 60 further comprises a drawer inlet opening 62 to allow a drawer 63 to enter the transfer station 60 and a drawer outlet opening 64 to allow a drawer 63 to exit the transfer station 60. The drawer inlet opening 62 physically coincides with the drawer outlet opening 64. Each aging rack 22 comprises a plurality of drawers 63.

Each drawer 63 is substantially the same as a drawer 24 of the formation rack 14 and comprises a gripper assembly 65 equipped with one or more grippers 66.

The aging rack further comprises a plurality of aging chambers 67 placed within the aging rack 22, above the transfer station 60. Each aging chamber 67 is defined by a respective housing space within the aging rack 22. Each aging chamber 67 is enclosed to the outside of the aging rack by one or more perimeter walls. Each aging station 67 is open towards the inside of the aging rack 22 to allow the insertion and removal of a drawer 63 coupled to a tray 11. The aging chambers 67 are placed one above the other along a first column of aging chambers 67 and in each aging rack 22 a plurality of columns of aging chambers 67 are provided. As schematically illustrated in Figures 11 and 12, there is a space in each aging rack 22 between the columns of aging chambers 67 not occupied by the aging chambers 67.

Each aging chamber 67 is configured to store, preferably at a controlled temperature, a drawer 63 bearing at least one tray 11 with a plurality of battery cells 100 inside that have already been subjected to the forming process. The aging chambers 67 are electrically passive in the sense that they do not supply electrical power to the battery cells 100.

Each aging rack 22 comprises a respective third transport system 68 essentially identical to the first transport system of a formation rack 14. The transport system 68, comprises a lifter 69 depicted in Figures 10 and 11. The lifter 69 may comprise two gripping handles 70 that laterally grip a drawer 63. The lifter 69 is connected to a movement device 71 that moves the lifter 69 within the aging rack 22. The third transport system 68 also comprises vertical guides 72 and, in the embodiment illustrated in Figures 10 and 11, horizontal guides 73. The vertical guides 72 run vertically inside the aging rack 22 and reach upwards to all the drawers 63. The vertical guides 72 extend from the transfer station 60. The horizontal guides 73 extend from the vertical guides 72 at each aging station 67 and reach the aging stations 67. The vertical guides 72 are placed in the space between the aging chamber columns 67, so that the lifter 69 carrying a respective drawer 63 can move within the aging rack 22. The movement device 71 may be any device capable of moving the lifter 69 along the vertical guides 72 and, when present, along the horizontal guides 73. The movement device 71 is preferably of the same type as the movement device 41 placed inside a formation rack 14.

As schematically illustrated in Figure 1, the modular tiles 17 are mounted together mechanically coupled in such a way as to define a modular track that reaches all the transfer stations 25 of the formation racks 14 and all the transfer stations 60 of the aging racks 22 (when provided). There may be any number of guide paths P defined on the modular track T, possibly even duplicated as mentioned above.

In use, each shuttle 18 picks up a tray 11 from the insertion station 19 and, following a respective guide path P on the modular track T reaches the transfer station 25 of a respective formation rack 14. The shuttle 18 lifts the tray 11 into the transfer station 25 of the formation rack 14 where the tray 11 is associated with a drawer 24. The first transport system 15 of the formation rack 14 places the drawer 24 inside a formation chamber 26 in which the battery cells 100 contained in the tray 11 are subjected to formation. Once formation is complete, the drawer 24 with the tray 11 is returned from the first transport system 15 of the formation rack 14 to the transfer station 25 from where the tray is uncoupled from the drawer 24 (following the coupling operations in reverse) and delivered to a shuttle 18. The shuttle 18 follows a guide path P until it reaches the transfer station 60 of a respective aging rack 22. The shuttle 18 lifts the tray 11 into the transfer station 60 of the aging rack 22 in which the tray 11 is associated with a drawer 63. The third transport system 68 of the aging rack 22 places the drawer 63 inside an aging chamber 67 in which the battery cells 100 contained in the tray 11 are subjected to the aging process. Once the aging process is complete, the drawer 63 with the tray 11 is returned from the third transport system 68 of the aging rack 22 to the transfer station 60 from where the tray is uncoupled from the drawer 63 (following the coupling operations in reverse) and delivered to a shuttle 18. The shuttle 18 follows a guide path P until it reaches the extraction station 23.

## Claims

1. Plant (10) for forming battery cells comprising:
a plurality of formation racks (14), wherein each formation rack (14) comprises:
a plurality of drawers (24) each of which can be coupled to at least one tray (11) configured to contain battery cells (100);
a transfer station (25) configured to transfer at least one tray (11) to a respective drawer (24);
a plurality of formation chambers (26) each configured to accommodate at least one drawer (24) and to provide a power supply to implement a formation of battery cells (100);
a first transport system (15) operating on each drawer (24) for selectively transporting said drawers (24) between the transfer station (25) and the formation stations (26);
said plant further comprising a second transport system (16) developing along the plant and reaching the transfer station (25) of each formation rack (14), wherein said second transport system (16) comprises:
a modular track (T) comprising a plurality of modular tiles (17) arranged in mechanical connection with each other to create at least one guide path (P); a plurality of shuttles (18), wherein each shuttle (18) runs along said modular track (T) following said guide path (P) and is configured to transport a tray (11) and wherein each shuttle (11) is provided with its own propulsion system (50).

2. Plant (10) according to claim 1, wherein each modular tile (17) comprises a grooved rail structure (44) having a first pair of parallel grooves (44a) and a second pair of parallel grooves (44b) extending in a direction perpendicular to the first pair of parallel grooves (44a), wherein the grooved rail structure (44) forms said at least one guide path (P) when the modular tiles (17) are arranged in mechanical connection with each other.

3. Plant (10) according to claim 2, wherein each modular tile (17) comprises alignment structures (46) arranged at side edges (17c, 17d, 17e, 17f) and configured to interact with alignment structures (46) of further modular tiles (17) to align the grooved rail structures (44) when the modular tiles (17) are arranged in mechanical connection with each other.

4. Plant (10) according to any one of the preceding claims, wherein each shuttle (18) comprises an on-board processor (49) that sends movement commands to the propulsion system (50) to move the shuttle (18) along said modular track (T).

5. Plant (10) according to any one of the preceding claims, wherein each modular tile (17) comprises a unique identification code (52).

6. Plant (10) according to any one of the preceding claims, wherein said second transport system (16) comprises support structures (45) to which said modular tiles (17) are connected; said support structures (45) resting on a floor level and supporting in elevation said modular track (T) at a transport level in elevation with respect to said floor level.

7. Plant (10) according to any one of the preceding claims, wherein said drawer (24) comprises a hooking group (30) configured to hook and retain said tray (11).

8. Plant (10) according to any one of the preceding claims, wherein each transfer station (25) comprises a tray entry opening (27) to allow entry of a tray (11) into the transfer station (25), a drawer entry opening (28) to allow entry of a drawer (24) into the transfer station (25) and a drawer exit opening (29) to allow exit of a drawer (24) from the transfer station (25).

9. Plant (10) according to claims 7 and 8, wherein said tray entry opening (27) is located at said transport level; each formation rack (14) comprising a maintenance station (38) located at said floor level.

10. Plant (10) according to claim 8, wherein said shuttle (18) comprises a pusher (48) for directing the tray (11) towards the tray entry (27) of the transfer station (25).

11. Plant (10) according to claim 10, wherein said modular track (T) comprises at least one modular tile (17) located below the tray entry opening (27); said pusher (48) of the shuttle (18) being a lifter configured to lift the tray (18) towards said drawer.

12. Plant (10) according to any one of the preceding claims, wherein said plurality of formation chambers (26) are arranged within a housing volume of the formation rack (14), above said transfer station (25).

13. Plant (10) according to any one of the preceding claims, wherein said first transport system (15) comprises a lifter (39) configured to retain a drawer (24), at least one movement device (41) of the lifter (39) and vertical guides (42) to which the lifter (39) is slidably connected.

14. Plant (10) according to claim 13, wherein said lifter (39) is placed internally to the formation rack (14).

15. Plant (10) according to any one of the preceding claims, comprising an insertion station (19) configured to position a tray (11) on a respective shuttle (18); said modular track (T) connecting the insertion station (19) with the transfer station (25) of each formation rack (14).

16. Plant (10) according to any one of the preceding claims, comprising a plurality of aging racks (22) wherein each aging rack (22) comprises:
a plurality of drawers (63) each of which can be coupled to at least one tray (11) configured to contain battery cells (100);
a transfer station (60) configured to transfer at least one tray (11) to a respective drawer (63);
a plurality of aging chambers (67) each configured to accommodate at least one drawer (63);
a third transport system (68) operating on each drawer (63) for selectively transporting said drawers (63) between the transfer station (60) and the aging stations (60);
wherein said modular track (T) also connects the transfer stations (25) of the formation racks (14) with the transfer stations (60) of the aging racks (22).
